# EUROPÄISCHE PATENTSCHRIFT

(11) **EP 0 953 711 B1**
(45) Veröffentlichungstag und Bekanntmachung des Hinweises auf die Patenterteilung: **28.08.2002**
(21) Anmeldenummer: 99107844.5
(22) Anmeldetag: 20.04.1999
(51) Int. Cl.: B29C 47/00, E06B 3/22

(54) **Verfahren zum Herstellen eines Profils für Fenster oder Türen**
Method of manufacturing a profile for windows or doors
Procédé pour la fabrication d'un profilé pour fenêtres ou portes

(30) Priorität: 28.04.1998 DE 19819009; 01.07.1998 DE 19829460
(43) Veröffentlichungstag der Anmeldung: 03.11.1999
(73) Patentinhaber: Kunststoffröhren Sendenhorst GmbH, 48324 Sendenhorst (DE)
(72) Erfinder: Funke, Norbert, 48324 Sendenhorst (DE); Poljanac, Rudolf, 48324 Sendenhorst (DE)
(74) Vertreter: Laufhütte, Dieter, Dr.-Ing.

(56) Entgegenhaltungen:
- EP-A- 0 737 561
- EP-A- 0 828 052
- DE-A- 3 024 107
- DE-U- 8 001 783

## Beschreibung

Die Erfindung betrifft ein Verfahren zum Herstellen eines Profils für Fenster oder Türen nach dem Oberbegriff des Anspruchs 1.

Bei Fenstern und Türen ist es grundsätzlich wünschenswert, eine hohe Wärrneund Schalldämmung zu erzielen. Hierbei sind sowohl die Konstruktion der Glasflächen, als auch die Ausgestaltung der Rahmenprofile von Bedeutung. Die vorliegende Erfindung bezieht sich speziell auf die Ausgestaltung der hierfür zu verwendenden Profile.

Bekannt sind Hohlprofile mit dünnwandigen Hart-PVC-Stegen. Aufgrund der durch die Stege gebildeten Kammern verbleibt in dem Hohlprofil Luft, die gegenüber der angrenzenden Wandung isolierend wirkt. Die Kammern sollen eine Wärmedämmung von der Außenseite gegenüber der Innenseite des Profiles bewirken. Für Fensterprofile sind beispielsweise 3-Kammer-Systeme üblich, hochwertige Fensterprofile sind seit neustem mit 4-Kammer-Systemen ausgestattet.

Problematisch ist allerdings die Tatsache, daß die Stege bzw. das Vollmaterial der Stege eine Wärmeleitung zwischen den Kammern zuläßt, die beträchtlich höher als die Wärmeleitung von Luft ist. Zwar ließe sich durch mehrere Kammern auch eine höhere Wärmedämmung erreichen, allerdings ist die Anzahl der in das Profil einzubringenden Kammern durch die äußere Geometrie sowie durch weitere in das Profil einzubringende Versteifungen aus Stahl begrenzt. Außerdem ist das Einbringen weiterer Kammern kostenaufwendig, so daß auch aus diesem Grund die Anzahl der Kammern nicht beliebig gesteigert werden soll.

Ein Hohlprofil, wie es zuvor beschrieben wurde, ist beispielsweise schon aus der EP 0 828 052 A2 bekannt. Dort wird bereits beschrieben, eine Sperrfolie während des Extrudiervorganges des Hohlprofils in die entsprechend gebildeten Kammern im Profil einzubringen. Dabei wird die auf einer Haspel vorrätig gehaltene Sperrfolie durch einen entsprechenden Durchbruch in der Extruderdüse zugeführt, wodurch eine kraftschlüssige Verbindung zwischen dem plastischen Kunststoffmaterial und der Sperrfolie entsteht.

Mit diesem Verfahren, bei dem die Sperrfolie vorgefertigt von einer Haspel abgezogen und dem das Profil bildenden Extruder zugeführt wird, mag aufgrund der vergleichsweise dünnen Wandung der Sperrfolie ein hinreichend gutes Verschweißen im Randbereich der Sperrfolie mit dem Profil möglich sein. Bei dickeren Folien bzw. bei dickeren wandartigen Stegen ist ein sicheres Verschweißen allerdings nicht mehr gewährleistet.

Zur Abhilfe könnte man auf die Idee kommen, an einem Werkzeug mehrere Extrudierlinien direkt anzuschließen, die einerseits die äußere Umhüllung für jedes Profil bilden und andererseits den das Profil unterteilenden Steg. Formt man allerdings in dem Werkzeug sowohl den äußeren Profilteil wie auch den im Inneren des Profils angeordneten Steg, so ergibt sich schon bei vergleichsweise niedrigen Formgeschwindigkeiten das Problem des gleichmäßigen Abkühlens des extrudierten Kunststoffs. Während im Außenprofilbereich ein vergleichsweise schnelles Abkühlen erfolgt, vermag die Wärme von dem im Werkzeug gebildeten inneren Steg nur ungenügend abgeführt werden, so daß es zu Verformungen und Verwerfungen des Gesamtprofils kommt.

Aufgabe der Erfindung ist es daher, ein Verfahren zur Herstellung eines Profils für Fenster oder Türen an die Hand zu geben, bei dem unter Erreichen hoher Formgeschwindigkeiten Profile für Fenster oder Türen der eingangs angegebenen Art formbar sind.

Erfindungsgemäß wird diese Aufgabe ausgehend von einem gattungsgemäßen Verfahren durch die Kombination mit den Merkmalen nach dem kennzeichnenden Teil des Anspruchs 1 gelöst. Dabei werden folgende Verfahrensschritte durchgeführt:
- Extrudieren des mindestens einen Steges mit einer ersten Extruderlinie,
- zumindest teilweises Abkühlen des mindestens einen aus der Extruderlinie austretenden Steg,
- Einführen des mindestens einen Steges in ein das Profil formendes Werkzeug,
- Bilden des Profils mit Außen- und Innenfläche in dem mit einer zweiten Extruderlinie verbundenen Werkzeug und
- Verschweißen des mindestens einen Steges mit dem im Werkzeug die Außen- bzw. Innenfläche bildenden Profilteil beim Austreten aus dem Werkzeug.

Durch das erfindungsgemäße Verfahren kann der aus der ersten Extruderlinie austretende Steg vor dem Eintritt in das Werkzeug, in welchem die Außen- bzw. Innenfläche des äußeren Profilteils gebildet wird, soweit abgekühlt werden, wie dies einerseits zum guten Verschweißen im Randbereich des mindestens einen Steges notwendig ist, ohne aber die Probleme des unzureichenden Wärmeabtransports in Kauf nehmen zu müssen.

Mittels dieses Verfahrens lassen sich die üblichen Formgeschwindigkeiten komplexer Fenster- bzw. Türprofile der eingangs angegebenen Art zumindest verdoppeln.

Bevorzugte Ausgestaltungen des erfindungsgemäßen Verfahrens ergeben sich aus den sich an den Hauptanspruch anschließenden Unteransprüchen. Demnach kann der mindestens eine Steg durch das Werkzeug auf eine Temperatur aufgewärmt sein, bei der der Steg noch eine genügend hohe Festigkeit aufweist, um mit dem Profil verschweißbar zu sein.

Weiterhin kann der mindestens eine Steg vorteilhaft aus einem geschäumten Material bestehen. Hiermit läßt sich in einfacher Weise eine erhöhte Wärmedämmung erreichen, ohne daß noch weitere zusätzliche Stege oder Kammern in das Fensterprofil eingebracht werden müssen.

Aus Festigkeitsgründen kann es erwünscht sein, den mindestens einen Steg soweit abzukühlen, daß ein Verschweißen nur noch schwierig möglich ist. Gerade für diesen Anwendungsfall ist es gemäß einer weiteren Ausgestaltung des Verfahrens vorgesehen, den Randbereich des mindestens einen Steges, entlang dessen dieser verschweißt werden soll, soweit aufzuheizen, daß eine gute Verschweißbarkeit zwischen dem die Außen- bzw. Innenfläche bildenden Profilteil und dem mindestens einen Steg erreicht wird.

Weiterhin kann anstelle eines oder mehrerer Stege auch ein komplexeres Innenprofil mit dem die Außen- bzw. Innenfläche bildenden Profilteil verschweißbar sein.

Weitere Vorteile und Einzelheiten der Erfindung ergeben sich aus einem in der Zeichnung dargestellten Ausführungsbeispiel. In dieser zeigt:
- Fig. 1:: Einen Querschnitt durch ein mit dem erfindungsgemäßen Verfahren hergestelltes Profil,
- Fig. 2:: einen Querschnitt durch ein Werkzeug zum Herstellen des erfindungsgemäßen Profils nach Fig. 1,
- Fig. 3:: einen weiteren Querschnitt durch ein gemäß einem erfindungsgemäßen Verfahren hergestellten Profil und
- Fig. 4:: einen dritten Querschnitt eines durch das erfindungsgemäße Verfahren hergestellten Profils.

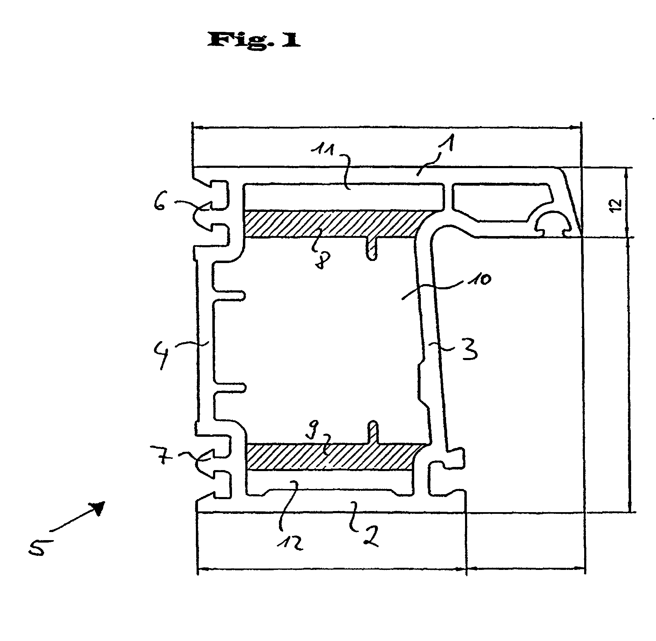

Fig. 1 zeigt einen Querschnitt durch das mit dem erfindungsgemäßen Verfahren hergestellte Profil. Das Profil besteht aus einer Außenfläche 1 und einer Innenfläche 2, die mit einer Verglasungsseite 3 und einer Mauerseite 4 das Profil 5 bilden. An der Mauerseite 4 sind Rasternasen 6 und 7 vorgesehen, die in ein Nebenprofil eingerastet werden können.

Sowohl hinter der Außenfläche 1 als auch hinter der Innenfläche 2 sind jeweils Stege 8, 9 vorgesehen, die mit der Außenfläche 1 bzw. Innenfläche 2 die Kammern 11, 12 bilden. Zwischen den Stegen 8, 9 befindet sich eine Stahlarmierung 10, die dem gesamten Profil die notwendige Stabilität verleiht. Die Kammern 11, 12 sind mit Luft gefüllt und bilden eine zusätzliche Isolierung zwischen der Außenfläche 1 und der Innenfläche 2.

Die Stege 8, 9 bestehen aus einem geschäumten Material. Vorzugsweise wird als Material dabei ein Hart-PVC-Kunststoff verwendet.

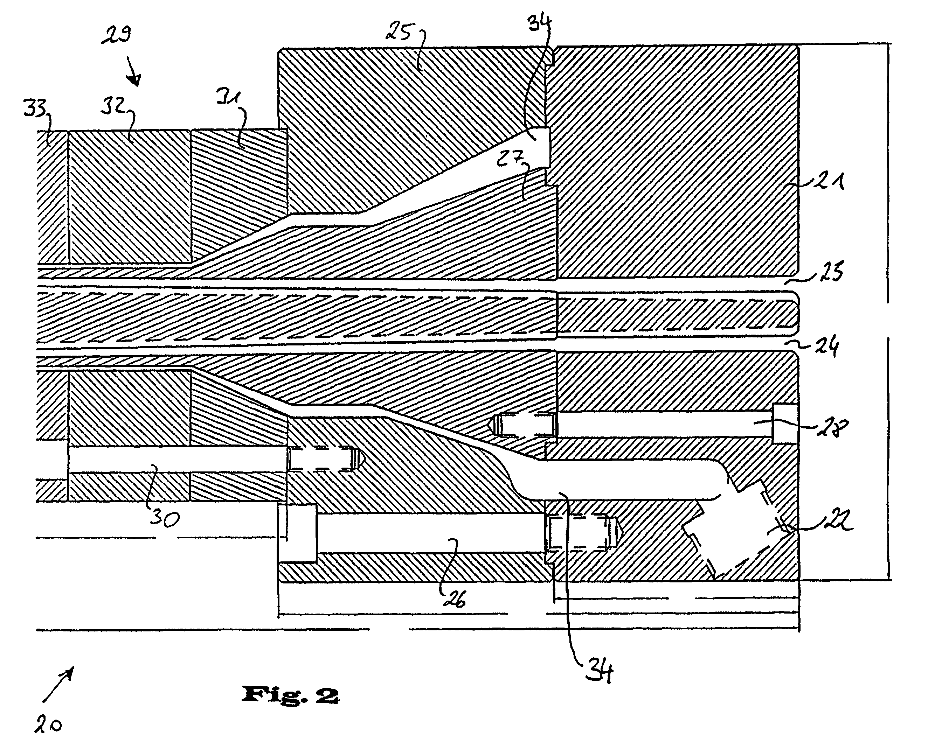

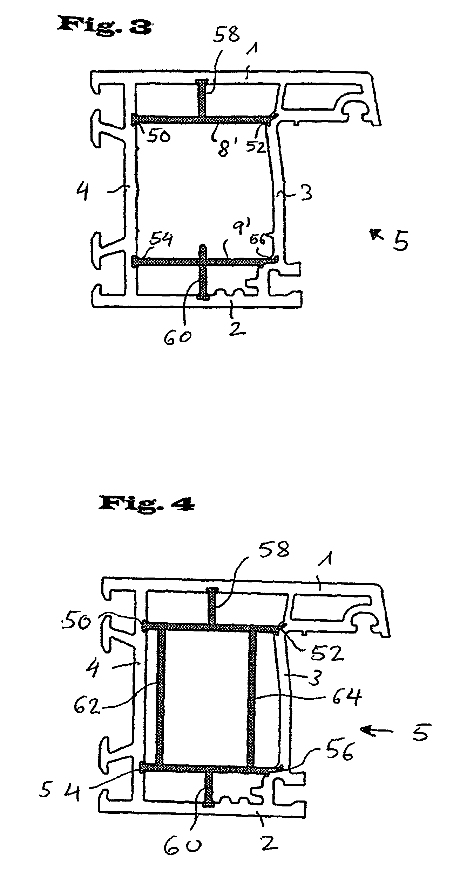

Fig. 2 zeigt einen Querschnitt durch ein Werkzeug zum Herstellen des mit dem erfindungsgemäßen Verfahren hergestellten Profils nach Fig. 1. Das Werkzeug 20 besteht aus einer Herzkurve 21, in die ein Anschluß 22 für einen Extruder eingebracht ist. Die Herzkurve weist Öffnungen 23, 24 auf, in die jeweils ein aus einem geschäumten Material bestehender Steg eingeführt werden kann. Die Herzkurve 21 ist über Schrauben 26 mit einem Stauring 25 verschraubt. In dem Stauring 25 befindet sich der Dorn 27, der über Schrauben 28 mit der Herzkurve 21 verschraubt ist. Vor dem Stauring 25 ist über Schrauben 30 eine Kopfplatte 29 befestigt, die aus einer Anzugsplatte 31 und zwei weiteren Platten 32, 33 besteht.

Zum Herstellen eines Profils nach Fig. 1 wird über den an den Anschluß 22 angeschlossenen Extruder die plastifizierte Kunststoffmasse extrudiert. Aufgrund der Stauwirkung im Bereich des Staurings 25 verteilt sich die Kunststoffmasse gleichmäßig in dem Fließkanal 34 innerhalb der Herzkurve 21. Im Bereich der Anzugsplatte 31 wird die Kunststoffmasse weiter verdichtet, während im Bereich der Platten 32, 33 eine Beruhigung des Materials eintritt. Hinter der Platte 33 tritt das Material aus dem Werkzeug 20 in Form des in Fig. 1 dargestellten Profils aus.

Parallel zum Extrudieren des an dem Anschluß 22 angeschlossenen Extruders werden über die Öffnungen 23, 24 jeweils zwei aus einem geschäumten Hart-PVC-Kunststoff bestehende Stege eingeführt. Vor den Öffnungen 23, 24 könnte sich dabei entweder eine weitere Extruderlinie oder ein Magazin befinden, das bereits fertig extrudierte Stege bereitstellt. Die eingeführten Stege durchlaufen das Werkzeug und verschweißen sich hinter der Platte 33 mit dem aus dem Werkzeug austretenden Profil. Hierbei muß die Austrittstemperatur der Stege aus dem Werkzeug zwar ausreichend sein, damit sich die Stege noch mit dem Profil verschweißen, allerdings darf Austrittstemperatur nicht so hoch sein, daß sich das Profil aufgrund der eingebrachten Stege zu stark aufheizt und sich dadurch verzieht. Auch mit einer Wasserkühlung des Profils hinter dem Werkzeug ist es nämlich nicht möglich, auch die Stege ausreichend schnell abzukühlen, da diese sich für eine Wasserkühlung unzugänglich im Inneren des Profils befinden.

Um die richtige Austrittstemperatur eines Stegs aus dem Werkzeug zu erreichen, ist weiterhin zu beachten, daß sich die eingeführten Stege beim Durchlauf durch das Werkzeug aufheizen. Es hat sich aber gezeigt, daß bei Stegen, die mit Raumtemperatur in das Werkzeug eingeführt werden, sich eine Austrittstemperatur einstellt, die die oben genannten Anforderungen erfüllt. Wird also vor dem Werkzeug eine zusätzliche Extrusionslinie für die Stege aufgebaut, muß diese Linie eine Abkühlstrecke aufweisen, die die Stege entsprechend abkühlt.

In Fig. 3 ist ein Profil 5 mit einer Außenfläche 1 und einer Innenfläche 2 einer Verglasungsseite 3 und einer Mauerseite 4 dargestellt. Die bei diesem Profil vorgesehenen Stege 8' und 9' sind jeweils an ihren Seitenkanten 50 und 52 bzw. 54 und 56 einer Seite mit der Mauerseite 4 und andererseits mit der Verglasungsseite 3 des Profils 5 verschweißt. Zusätzlich weisen die Stege 8' und 9' noch einen ungefähr mittig angesetzten senkrecht zu ihnen verlaufenden Steg 58 bzw. 60 auf. Der Steg 58 ist mit seiner freien Seitenkante mit der Außenfläche 1 des Profils 5 verschweißt und der Steg 60 ist mit seiner freien Seitenkante mit der Innenfläche 2 verschweißt.

In der Fig. 4 ist ein Profil 5 gezeigt, das geringfügig von demjenigen gemäß Fig. 3 abweicht. Hier sind die Stege 8' und 9' jeweils nochmals durch querverlaufende Wände 62 und 64 derart miteinander verbunden, so daß sich insgesamt ein zusammenhängendes Innenprofil ergibt, das aus den Stegen 8' und 9' mit ihren senkrechten Stegen 58 und 60 und den Verbindungsstegen 62 und 64 besteht.

Auch das geschlossene Innenprofil gemäß der Fig. 4 wird in einer ersten Extrudierlinie extrudiert und abschließend abgekühlt. Es wird dann in ein das Profil formendes Werkzeug eingeführt, in welchem auch das Profil 5 mit der Außenfläche 1 und der Innenfläche 2 sowie der Verglasungsseitenfläche 3 bzw. der Mauerseitenfläche 4 extrudiert wird. Um ein sicheres Verschweißen zwischen dem Innenprofil und dem Außenprofil zu erreichen werden die Seitenkanten des Innenprofils mittels eines Heißluftgebläses nochmals soweit erhitzt, daß ein sicheres Verschweißen ermöglicht wird. Anstelle der Heißluftdüsen könnten auch Heizpatronen zur Aufheizung der Seitenkanten vorgesehen werden.

## Patentansprüche

1. Verfahren zum Herstellen eines Profils für Fenster oder Türen mit einer Außenfläche und mit einer Innenfläche und mit mindestens einem Steg, der zwischen der Außenfläche und der Innenfläche eine Kammer abtrennt,
**gekennzeichnet durch** folgende Schritte:
- Extrudieren des mindestens einen Steges in einer ersten Extruderlinie,
- zumindest teilweises Abkühlen des mindestens einen aus der Extruderlinie austretenden Steges,
- Einführen des mindestens einen Steges in ein das Profil formendes Werkzeug,
- Bilden des Profils mit Außen- und Innenfläche in dem mit einer zweiten Extruderlinie verbundenen Werkzeug und
- Verschweißen des mindestens einen Steges mit dem im Werkzeug die Außen- bzw. Innenfläche bildenden Profilteil beim Austreten aus dem Werkzeug.

2. Verfahren nach Anspruch 1, **dadurch gekennzeichnet, daß** der mindestens eine Steg durch das Werkzeug auf eine Temperatur aufgewärmt wird, bei der der Steg noch eine genügend hohe Festigkeit aufweist, um mit dem Profil verschweißbar zu sein.

3. Verfahren nach Anspruch 1 oder 2, **dadurch gekennzeichnet, daß** der mindestens eine Steg aus einem geschäumten Material besteht.

4. Verfahren nach einem der Ansprüche 1 bis 3, **dadurch gekennzeichnet, daß** der mindestens eine Steg nach Austreten aus der ersten Extruderlinie zunächst weitgehend abgekühlt wird und daß er zumindest im Bereich der Seitenränder, die mit dem die Außen- bzw. Innenfläche bildenden Profilteil verbunden werden, gezielt aufgeheizt werden, so daß der mindestens eine Steg mit dem die Außen- bzw. Innenfläche bildenden Profilteil verschweißt wird.

5. Verfahren nach einem der Ansprüche 1 bis 4, **dadurch gekennzeichnet, daß** anstelle eines Steges ein innenliegendes Profil mit dem die Außenfläche und Innenfläche bildenden Profil verbunden wird.

## Claims

1. Process for producing a profile for windows or doors, having an outer surface and having an inner surface and having at least one web which separates off a chamber between the outer surface and the inner surface,
**characterized by** the following steps:
- extruding the at least one web in a first extrusion line,
- at least partially cooling the at least one web passing out of the extrusion line,
- introducing the at least one web into a profile-forming mould,
- forming the profile with outer and inner surfaces in the mould, which is connected to a second extrusion line, and
- welding the at least one web to the profile part forming the outer and inner surfaces in the mould, during passage out of the mould.

2. Process according to Claim 1, **characterized in that** the at least one web is heated by the mould to a temperature at which the web still has a sufficiently high strength in order to be capable of being welded to the profile.

3. Process according to Claim 1 or 2, **characterized in that** the at least one web consists of a foamed material.

4. Process according to one of Claims 1 to 3, **characterized in that** the at least one web is first of all largely cooled following passage out of the first extrusion line, and **in that** it is specifically heated up, at least in the region of the side borders which are connected to the profile part forming the outer and inner surfaces, with the result that the at least one web is welded to the profile part forming the outer and inner surfaces.

5. Process according to one of Claims 1 to 4, **characterized in that**, instead of a web, an inner profile is connected to the profile forming the outer surface and inner surface.

## Revendications

1. Procédé de fabrication d'un profilé pour fenêtres ou portes avec une face extérieure et avec une face intérieure et avec au moins une baguette qui sépare entre la face extérieure et la face intérieure une chambre, **caractérisé par** les étapes suivantes :
- extrusion d'au moins une baguette dans une première chaîne d'extrusion,
- refroidissement au moins partiel d au moins une baguette sortant de la chaîne d'extrusion,
- introduction d'au moins une baguette dans un outil formant le profilé,
- formation du profilé avec la face extérieure et la face intérieure dans l'outil relié à une deuxième chaîne d'extrusion et
- soudage d'au moins une baguette avec la partie profilée formant dans l'outil les faces extérieure respectivement intérieure lors de la sortie de l'outil.

2. Procédé selon la revendication 1, **caractérisé en ce qu'**au moins une baguette est chauffée par l'outil à une température à laquelle la baguette présente encore une solidité suffisante pour pouvoir être assemblée par soudage avec le profilé.

3. Procédé selon la revendication 1 ou 2, **caractérisé en ce qu'**au moins une baguette est réalisée en un matériau moussé.

4. Procédé selon l'une des revendications 1 à 3, **caractérisé en ce qu'**au moins une baguette, après la sortie de la première chaîne d'extrusion, est d'abord refroidie dans une grande mesure et qu'elle est chauffée d'une manière ciblée au moins au voisinage des bords latéraux qui sont reliés à la partie profilée formant les faces extérieure respectivement intérieure de telle sorte que la baguette précitée est assemblée par soudage avec la partie profilée formant les faces extérieure respectivement intérieure.

5. Procédé selon l'une des revendications 1 à 4, **caractérisé en ce que**, à la place d'une baguette, un profilé situé à l'intérieur est assemblé avec le profilé formant la face extérieure et la face intérieure.
